# EUROPEAN PATENT SPECIFICATION

(11) **EP 1 628 272 B1**
(45) Date of publication and mention of the grant of the patent: **27.05.2009**
(21) Application number: 05106414.5
(22) Date of filing: 13.07.2005
(51) Int. Cl.: G08B 13/24

(54) **Window material for vehicle**
Fenstermaterial für Fahrzeuge
Matériau de fenêtre pour véhicules

(30) Priority: 15.07.2004 JP 2004208245; 31.03.2005 JP 2005103562
(43) Date of publication of application: 22.02.2006
(73) Proprietor: Nippon Sheet Glass Company, Limited, Tokyo 105-8552 (JP)
(72) Inventor: Ohara, Shohei, c/o Nippon Sheet Glass Co., Ltd., Tokyo 105-8552 (JP); Kokuryo, Kazuto, c/o Zeniz Inc., Shiga-ken 520-2144 (JP)
(74) Representative: Winblad, Hans Peter

(56) References cited:
- EP-A- 0 561 272
- EP-A- 0 720 249
- US-A- 5 005 020
- US-B1- 6 275 157

## Description

The present invention relates to a window structure for a vehicle provided with an identification marker.

In recent years, there have been proposed a vehicle provided thereof with an identification apparatus in a part thereof and a window pane for a vehicle provided with an identification apparatus. The purposes are to prevent vehicles and window panes for a vehicle from being stolen or enable the production history of window panes for a vehicle to be tracked.

Patent document No. 1 discloses an identification apparatus using a diffraction grating. Patent document No. 2 discloses an identification apparatus implemented by a sticker for affixation. Patent document No. 3 discloses a vehicle identification system that enables identification of a vehicle by building an IC tag in a license plate. Patent document No. 4 discloses an apparatus for detecting an illegally parking vehicle, using an IC tag.

### [patent document No. 1]

JP 10-171955 A

### [patent document No. 2]

JP 2002-366036 A

### [patent document No. 3]

JP 2002-260164 A

### [patent document No. 4]

JP 2001-288376

However, according to the methods disclosed in patent documents No. 1 and 2 described above, the volume of information stored in the identification apparatus is small or the data stored in the identification apparatus cannot be changed. Accordingly, it is necessary to store information when the identification apparatus is produced. According to the method disclosed in patent document No. 3, identification of a vehicle becomes difficult if the license plate is replaced after the vehicle is stolen. Another problem is that, since the pane itself is not provided with an identification apparatus, the history of production of the pane cannot be tracked. Patent document No. 4 does not give any disclosure of the location of attaching the IC tag.

US 6 275 157 A provides a transponder embedded in a glass surface, such as a windshield, to provide for the storage and retrieval of vehicle related data.

The present invention has been made in view of the aforementioned problems and its object is to provide a window structure for a vehicle in which information can be easily written, added, changed and deleted. Another object of the present invention is to provide a window structure for a vehicle capable of storing a large volume of data.

Still another object of the present invention is to provide a window structure for a vehicle capable of easily identifying attributes related to the production of a pane. Yet another object of the present invention is to provide a window structure for a vehicle that is not easily separated from a pane. Still another object of the present invention is to provide a window structure for a vehicle capable of covering an identification apparatus to hide it from view.

In order to achieve the aforementioned objects, the present invention provides a window structure for a vehicle according to claim 1.

The present invention provides a window structure for a vehicle comprising: a pane; a frame provided at the periphery of the pane; and an identification apparatus placed in a space surrounded by the pane and the frame.

According to the invention, the identification apparatus cannot be easily separated from the window material for a vehicle. Further, the identification apparatus can be hidden from view, covered by the window material for a vehicle. This can deter the action of trying to remove the identification apparatus when the vehicle is stolen.

The window material for a vehicle may further comprise an intermediate film placed between the pair of bases and joining the pair of bases. The identification apparatus may comprise: an antenna capable of transmitting and receiving information; and storage means connected to the antenna and storing the information transmitted and received by the antenna. The storage means may be an IC chip. With this, a large volume of data can be stored.

The information may include at least one of a serial number of the base, time of production, location of production, process of production, person in charge of production and history of buying and selling. With this, the information such as a serial number of the base, time of production, location of production, process of production, person in charge of production and history of buying and selling can be easily obtained from the identification apparatus. For example, the stolen vehicle can be identified easily, or time of production or process of production can be identified easily.

The pair of bases may be formed of glass. The pair of bases may be formed of a combination of different materials selected from a group comprising glass, resin and ceramics.

Fig. 1 is a top view of an identification apparatus according to an embodiment of the present invention in which an antenna and an IC chip are formed on a resin film.

Fig. 2 is a section of the window material for a vehicle according to the embodiment.

Fig. 3 is a section of the window material for a vehicle according to another embodiment of the present invention.

A description will be given of the best mode of practicing the invention. The embodiment will be described with examples where glass is used for a base.

A window pane for a vehicle embodying a window material for a vehicle according to the embodiment is provided with a pair of panes placed such that the main surfaces thereof are opposite to each other and an identification apparatus placed between a pair of bases. The term "main surface" refers to a surface of the base on which an identification apparatus is placed, i.e., the surface of contact of the base. The identification apparatus is provided with an antenna capable of transmitting and receiving information and a storage means connected to the antenna and storing information transmitted and received via the antenna.

The antenna according the embodiment is fabricated by forming an antenna line (printed line) of a conductive (for example, a material primarily containing copper or silver) on a resin film of a thickness of 1mm or below. Preferably, the antenna is suitable for transmission and reception of a predetermined radio wave used in rewriting and reading of information.

A loop antenna may be used as the antenna. When a loop antenna is used, high receiving sensitivity is achieved by ensuring that the line length of the loop is an integral multiple of λ/4 (λ: wavelength of wave used in information rewriting and reading).

The loop antenna maybe formed by connecting both ends of a circular or rectangular antenna line to an IC chip. Alternatively, the antenna may be formed by connecting both ends of a vortex antenna to an IC chip. Forming the antenna as a vortex is favorable in that it can further reduce the size of the identification apparatus as a whole.

The antenna line of a conductive material may be formed by printing conductive paste on the resin film. It is favorable to superimpose and affix an additional resin film on the resin surface on which the antenna of a conductive material is formed in that it prevents the conductive material from being harmed or disconnected by external shock.

An IC chip available on the market may be used as the information storage means used in the present invention. An IC chip is favorable in that it allows easy rewriting of information when used in combination with the antenna and that it is capable of storing a large volume of information and is small-sized.

The frequency of the radio wave used in information rewriting and reading may be 2.45GHz, 433MHz or the like. Combining the antenna transmitting and receiving at 2.45GHz with an IC chip is favorable in that it can reduce the size of the antenna.

An IC chip (identification apparatus) coupled with the antenna may be obtained by connecting an IC chip to the antenna line formed on the resin film. Preferably, the resin film connected to the identification apparatus is adhesive because an adhesive film can easily fix the identification apparatus to the main surface of the pane. The position where the identification apparatus is fitted may be a space surrounded by the pane and the frame instead of between a pair of panes. The frame may be formed of a resin.

When an identification apparatus is used in a window pane for a vehicle embodied by a glass panel with a resin frame being disposed around a pane, a pane with a favorable appearance is produced in which the identification apparatus is invisible, by placing the identification apparatus in a space surrounded by the pane and the frame. By forming the resin frame by injection molding, the frame is prohibited from coming off the pane easily, which is favorable in that the identification apparatus cannot be dismounted easily.

When an identification apparatus is used in a window pane for a vehicle embodied by a laminated glass produced by pasting two panes to each other via a thermoplastic resin film, it is favorable that the identification apparatus be placed between the two panes or, more specifically, at the interface between the glass and the thermoplastic resin film. With this, it is ensured that the identification apparatus is formed inside the window pane for a vehicle, with the result that the identification cannot be dismounted easily.

By forming a shielding layer at the periphery of the window pane for a vehicle and by placing the identification apparatus at the position in which it overlaps the shielding layer, a pane with a favorable appearance is produced in which the identification apparatus is invisible at least from one surface of the pane. By ensuring that the identification apparatus is of the same color as the shielding layer, the identification apparatus is made even more invisible.

When the identification apparatus is used in a window pane for a vehicle embodied by a tempered glass panel, a window pane for a vehicle provided with an identification apparatus is obtained by pasting the identification to the surface of the tempered glass by an adhesive or the like. As in the case of laminated glass, a tempered glass panel in which the identification apparatus is hardly visible is naturally obtained by forming a shielding layer and ensuring that the identification apparatus is of the same color as the shielding layer.

In the window pane for a vehicle provided with an identification apparatus obtained as described above, information may be stored by transmitting information for storage to the antenna connected to the IC chip, using a known signal generator. With this, a voltage is developed on the antenna and the IC chip is operated so that the information is stored in the IC chip. Input of information may be done in an individual fabrication process or in a main process. Information may be input after the window pane for a vehicle is built in the vehicle.

The information stored may include attributes related to production such as a serial number of the window pane or the vehicle, time of production, location of production, process of production and person in charge of production, attributes related to use such as a history of buying and selling, and attributes related to product such as ingredients of glass or functions. Thus, the pane for a vehicle in which information is stored is obtained.

The information stored in the identification apparatus may suitably be read by the same known method as used in inputting. While the embodiment is described with an example where the antenna line is implemented by a printed line, the antenna line may be a wire.

### [First example]

### (Identification apparatus)

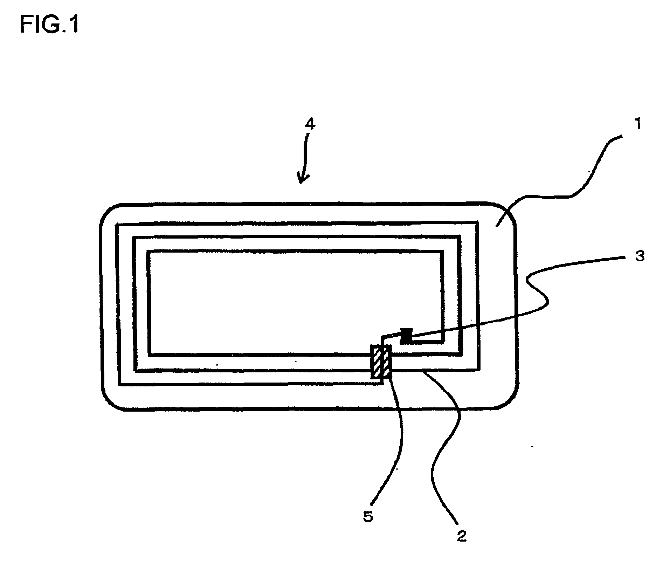

As illustrated in Fig. 1, conductive paste is printed on a resin film 1 with an adhesive surface so as to form a vortex antenna 2. An identification apparatus 5 is then obtained by connecting both ends of the antenna 2 to an IC chip 3. Where lines of the antenna 2 overlap, an insulating material or a dielectric 5 is placed between the antenna lines so as to prevent the antenna lines from coming into contact.

### (First window pane for a vehicle)

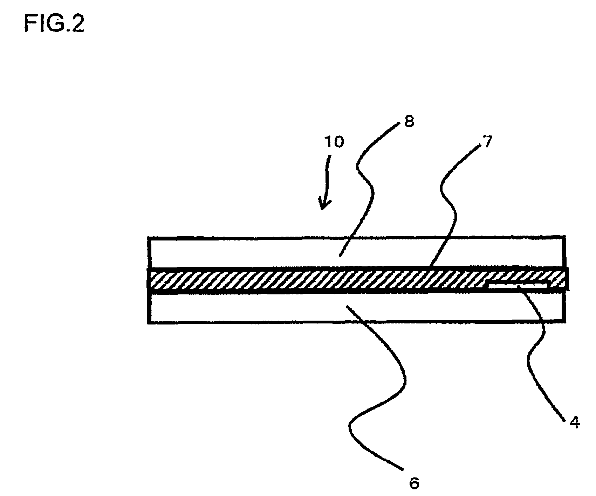

A stack of two panes cut to a predetermined configuration is introduced into a bend-forming furnace to bend the panes into a predetermined configuration. The panes are then isolated from each other. The identification apparatus 4 is pasted onto the surface of one of isolated panes 6, which surface is fitted with a thermoplastic resin film 7. Two panes 6, 8 are then stacked on each other again with the identification apparatus 4 and the thermoplastic resin film 7 interposed between the panes. The stacked panes 6, 8 are temporarily adhered to each other by deaeration by means of vacuum pumping while the panes are being heated at 120° C. Subsequently, the panes are heated and pressurized for thirty minutes at a temperature of 140 ° C and a pressure of 1.5MPa (approximately, 15kg/cm2). The window pane 10 for a vehicle provided with an identification apparatus, as illustrated in Fig. 2, is thus obtained.

### [Second example]

### (Second window pane for a vehicle)

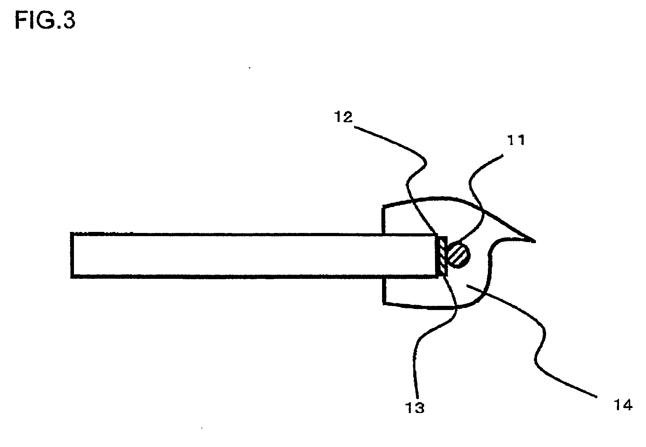

As illustrated in Fig. 3, an identification apparatus 11 housed in a capsule container is fitted to a pane end 12 forming a frame 14, using an adhesive 13. The pane fitted with the identification apparatus 11 is mounted in injection molding equipment. By injecting the resin into the injection molding equipment, the frame 14 is formed and the window pane for a vehicle provided with the identification apparatus 11 and the frame 14 is obtained.

What has been described is based on the examples which are non-limiting. Variations including design modifications based on the knowledge of those skilled in the art are possible within the scope of the present invention.

For example, while the base is assumed to be formed of glass in the described embodiment, the base may be formed of a resin such as polycarbonate or ceramics such as quartz. A pair of bases may be a formed of a combination of different materials such as a combination of glass and resin, a combination of glass and ceramics, or a combination of resin and ceramics.

When the base is formed of polycarbonate, ethylene vinyl acetate copolymer (EVA) is generally used as an intermediate film. Visible light transmittance of the base is immaterial to the invention. The base may be semitransparent like frosted glass.

According to the invention, at least one of the following effects are delivered. (1) Information can be easily written, added, changed and deleted; (2) a large volume of data can be stored; (3) attributes related to production can be easily identified; (4) the identification apparatus is not easily separated; and (5) the identification apparatus can be hidden from view.

## Claims

1. A window structure for a vehicle comprising:
a pane;
a frame (14) provided at and surrounding the periphery of the pane; and
an identification apparatus (4,11) comprising an antenna (2) capable of transmitting and receiving information; and storage means connected to the antenna (2) and storing the information transmitted and received by the antenna (2), **characterized in that** the identification apparatus (4,11) is placed in a space between the periphery of the pane and the frame (14).

2. The window structure according to claim 1, wherein the storage means is an IC chip (3).

3. The window structure according to claim 1 or 2, wherein the information includes at least one of a serial number of the pane, time of production, location of production, process of production, person in charge of production and history of buying and selling.

4. The window structure according to any one of claims 1-34, wherein the pane is formed of glass.

5. The window structure according to any one of claims 1-3, wherein the pane is formed of a combination of different materials selected from a group comprising glass, resin and ceramics.

## Patentansprüche

1. Fensterstruktur für ein Fahrzeug, umfassend
eine Fensterscheibe;
einen Rahmen (14), der an dem Rand der Fensterscheibe und diesen umgebend vorhanden ist; und
eine Identifikationsvorrichtung (4, 11) mit einer Antenne (2), die zum Übertragen und Empfangen einer Information geeignet ist; und ein Speichermittel, das mit der Antenne (2) verbunden ist und die durch die Antenne (2) übertragene und empfangene Information speichert,
**dadurch gekennzeichnet, dass**
die Identifikationsvorrichtung (4, 11) in einem Raum zwischen dem Rand der Fensterscheibe und dem Rahmen (14) platziert ist.

2. Fensterstruktur nach Anspruch 1, wobei das Speichermittel ein IC-Chip (3) ist.

3. Fensterstruktur nach Anspruch 1 oder 2, wobei die Information zumindest eins aus einer Seriennummer der Fensterscheibe, Herstellungszeit, Herstellungsort, Herstellungsverfahren, für die Herstellung verantwortliche Person und Verlauf von An- und Verkauf enthält.

4. Fensterstruktur nach einem der Ansprüche 1 bis 3, wobei die Fensterscheibe aus Glas gebildet ist.

5. Fensterstruktur nach einem der Ansprüche 1 bis 3, wobei die Fensterscheibe aus einer Kombination verschiedener Materialien gebildet ist, die aus einer Gruppe ausgewählt sind, die Glas, Harz und Keramik enthält.

## Revendications

1. Structure de fenêtre pour véhicule comprenant :
➢ un carreau de vitre ;
➢ un cadre (14) disposé et entourant la périphérie du carreau de vitre, et entourant celle-ci ; et
➢ un appareil d'identification (4, 11) qui comprend une antenne (2) capable d'émettre et de recevoir des informations ; et
➢ des moyens de stockage connectés à l'antenne (2) et qui stockent les informations émises et reçues par l'antenne (2),
**caractérisée en ce que** l'appareil d'identification (4, 11) est placé dans un espace situé entre la périphérie du carreau de vitre et le cadre (14).

2. Structure de fenêtre selon la revendication 1, dans laquelle les moyens de stockage sont constitués par une puce de circuit intégré (3).

3. Structure de fenêtre selon la revendication 1 ou la revendication 2, dans laquelle les informations comprennent au moins un élément parmi un numéro de série du carreau de vitre, une date de production, un lieu de production, un procédé de production, une personne responsable de la production et un historique de l'achat et de la vente.

4. Structure de fenêtre selon l'une quelconque des revendications 1 à 3, dans laquelle le carreau de vitre se compose de verre.

5. Structure de fenêtre selon l'une quelconque des revendications 1 à 3, dans laquelle le carreau de vitre se compose d'une combinaison de différents matériaux sélectionnés dans un groupe comprenant le verre, la résine et la céramique.
